# EUROPEAN PATENT SPECIFICATION

(11) **EP 3 576 958 B1**
(45) Date of publication and mention of the grant of the patent: **29.06.2022**
(21) Application number: 18703832.8
(22) Date of filing: 31.01.2018
(51) Int. Cl.: B42D 25/435, B42D 25/44, B42D 25/425, B42D 25/41, B42D 25/324, B42D 25/328, B42D 25/351, B42D 25/355, B42D 25/364, B42D 25/373, B42D 25/378, B42D 25/23, B42D 25/24, B42D 25/29

(54) **METHOD OF FORMING A SECURITY DOCUMENT**
VERFAHREN ZUR HERSTELLUNG EINES SICHERHEITSDOKUMENTS
PROCÉDÉ DE FORMATION D'UN DOCUMENT DE SÉCURITÉ

(30) Priority: 03.02.2017 GB 201701795
(43) Date of publication of application: 11.12.2019
(73) Proprietor: De La Rue International Limited, Basingstoke, Hampshire RG22 4BS (GB)
(72) Inventor: GODFREY, John, London SW12 9LX (GB); LOCKE, Rebecca, Kingsclere Hampshire RG20 5PW (GB)
(74) Representative: Gill Jennings & Every LLP
(86) International application number: PCT/GB2018/050279
(87) International publication number: WO 2018/142127

(56) References cited:
- WO-A1-2004/030928
- WO-A1-2009/066048
- WO-A1-2013/017865
- WO-A1-2013/022699
- WO-A1-2013/064268
- US-A1- 2012 193 905

## Description

### FIELD OF THE INVENTION

The present invention relates to a method of forming a security document, in particular forming a security document containing personalised information.

### BACKGROUND TO THE INVENTION

To prevent counterfeiting and to enable authenticity to be checked, security documents are typically provided with one or more security devices which are difficult or impossible to replicate accurately with commonly available means such as photocopiers, scanners or commercial printers. "Personalised" security documents containing unique security devices add an extra layer of security; however, producing a large number of unique security devices which to embed in finished security documents is both expensive and time consuming.

One well known type of security device is one which uses a colour shifting element to produce an optically variable effect that is difficult to counterfeit. Such a colour shifting element generates a coloured appearance which changes dependent on the viewing angle. Examples of known colour shifting structures include photonic crystals, liquid crystals, interference pigments, pearlescent pigments, structured interference materials or thin film interference structures including Bragg stacks.

It is also known in the art that the optical effect produced by a colour shifting element can be modified by introducing a film comprising a surface relief over the colour shifting element, wherein the surface relief modifies the angle of light incident to, and reflected from, the colour shifting element so as to provide a different optical effect to the viewer. For example, such an additional "light control" layer may produce colour shifting effects which are visible closer to a normal angle of viewing with respect to the device, and may enable more colours to be viewed on tilting the device as compared to the colour shifting element in isolation.

As discussed, it is known in the art how to produce and control colour shifting elements for use in security devices. However, it is desirable to provide a new method of forming a security document which utilises the effects of colour shifting elements, but which also enables efficient personalisation of the security document.

WO 2009/066048 discloses examples of security devices comprising colour shifting materials and micro optical structures.

US 2012/0193905 and WO 2013/064268 disclose examples of security devices utilising micro lens arrangements.

WO 2013/022699 discloses further examples of security devices comprising a combination of colour shifting materials and micro optical structures.

### SUMMARY OF THE INVENTION

In accordance with a first aspect of the present invention, there is provided a method of forming a security document as defined in claim 1.

In addressing the problems discussed above in relation to providing personalisation of a security document, or providing a unique security document, we have realised that we can utilise the three-dimensional nature of the surface structure of a light control layer in order to control the characteristics of a security device comprising such a light control layer once it is already integrated into a security document substrate. For example, the method allows a number of security document substrates to be individually personalised by selectively modifying the light control layer of the integrated security device rather than having to individually produce a large number of different security devices which have to be subsequently integrated into security document substrates.

The expression "colour shifting element" is used to refer to any material which can selectively reflect or transmit incident light to create an optically variable effect, in particular an angularly dependent coloured reflection or transmission. Examples of such a colour shifting element include photonic crystals, liquid crystals, interference pigments, pearlescent pigments, structured interference materials or thin film interference structures including Bragg stacks.

In general the colour shifting element may be substantially opaque or partially transparent. A partially transparent colour shifting element (for example a layer of cholesteric liquid crystal material) transmits at least some of the light that is incident upon it as well as providing an optical effect in reflection. An example of a substantially opaque colour shifting element is an optically variable pigment. Optically variable pigments having a colour shift between two distinct colours, with the colour shift being dependent on the viewing angle, are well known. The production of these pigments, their use and their characteristic features are described in, inter-alia, US-B-4434010, US-B-5059245, US-B-5084351, US-B-5135812, US-B-5171363, US-B-5571624, EP-A-0341002, EP-A-0736073, EP-A-668329, EP-A-0741170 and EP-A-1114102. Optically variable pigments having a viewing angle- dependent shift of colour are based on a stack of superposed thin-film layers with different optical characteristics. The hue, the amount of colour-shifting and the chromaticity of such thin-film structures depend inter alia on the material constituting the layers, the sequence and the number of layers, the layer thickness, as well as on the production process. Generally, optically variable pigments comprise an opaque totally reflecting layer, a dielectric layer of a low refractive index material (i.e. with an index of refraction of 1.65 or less) deposited on top of the opaque layer and a semi-transparent partially reflecting layer applied on the dielectric layer.

The security device may be viewed in reflection or transmission. If the device (and therefore the security document) is intended to be viewed in reflection and comprises a partially transparent colour shifting element, it is preferable that the security device further comprises an absorbing element positioned on a distal side of the colour shifting element with respect to the light control layer (i.e. such that the colour shifting element is positioned between the light-absorbing element and the viewer) and operable to at least partially absorb light transmitted through the colour shifting element. This is because the colour shifting element will only reflect certain wavelengths of light. Therefore, the presence of a light-absorbing element under the colour shifting element absorbs light that is transmitted through the colour shifting element and ensures that light reflected from the colour shifting element dominates. In the case where a substantially opaque colour shifting element is used, such an absorbing element is not required.

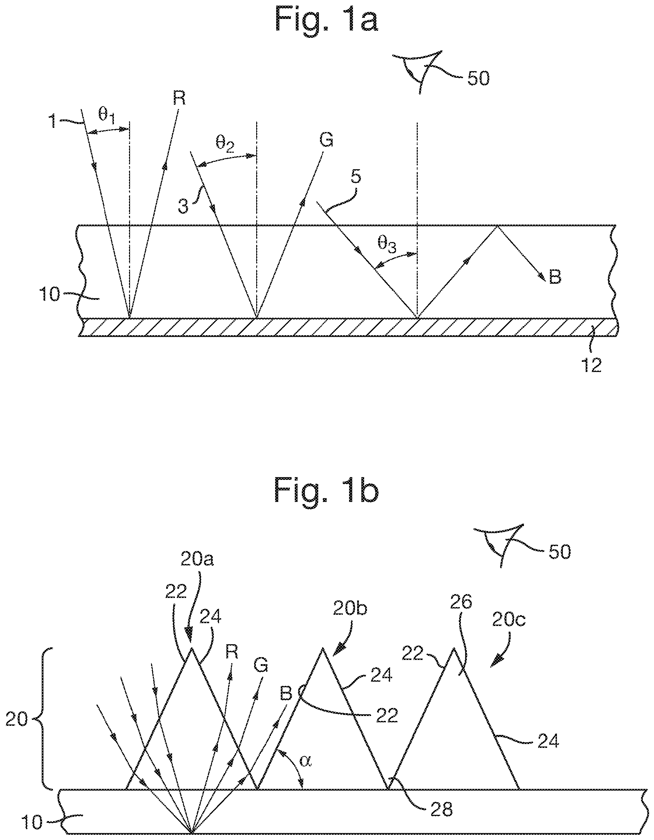

The light control layer comprises a microprismatic structure, wherein the microprismatic structure comprises a plurality of microprisms. Without the presence of the light control layer, light reflected from the colour shifting element would be refracted at the interface between the colour shifting element and the air, due to the difference in refractive indices between the two. The microprismatic structure of the light control layer means that the interface between the light control layer and the air is angled with respect to the colour shifting element, thereby modifying the angle of light from the colour shifting element, giving rise to the first optical effect that is different to the optical effect that would be exhibited by the colour shifting element in isolation. As an example, a cholesteric liquid crystal colour shifting material in isolation may provide a red to green colour shift effect when tilted. However, when a microprismatic light control layer is provided over such a light control element, a red to blue colour shift effect (with a green colour exhibited at an intermediary viewing angle between red and blue) is exhibited to the user as blue light reflected from the colour shifting material is no longer totally internally reflected (see Figure 1b). It is this red to blue colour shift in this example that is the "first optical effect". Although red to green and red to blue colour shifts have been used as examples here, the exact optical effects will be dependent upon at least the colour shifting material used, the refractive index of the light control layer and the angles that the facets of the microprismatic structure make with the colour shifting element. For example a colour shifting element that exhibits a black (infra-red) to red colour shift upon a change of viewing angle may be used.

Here "tilting" is used to mean a change in viewing angle of the security document by tilting the document about an axis in the plane of the document. Typically the change in viewing angle is from a normal angle of viewing to a non-normal angle of viewing.

The microprismatic structure may comprise an array of linear microprisms. In one embodiment, the microprismatic structure comprises two or more arrays of linear micro prisms, wherein the long axes of one array are angularly offset from the axes of the other array. This provides a rotational optical effect as well as the colour shifting effect dependent on a tilt angle of the security document, wherein the rotational effect is dependent on the azimuthal angle of viewing with respect to the arrays of linear micro prisms. The optical effect due to the presence of a microprism array will be more readily observed when the device is viewed in an azimuthal direction perpendicular to the long axes of the array rather than in an azimuthal direction parallel to the long axes of the array.

Other forms of microprismatic structures are envisaged, for example structures comprising microprisms having an asymmetrical structure or a repeating faceted structure.

The microprismatic structures described above are referred to as one dimensional structures, as the modification of the light reflected from the colour shifting element is primarily observed in one rotational viewing direction with respect to an individual micro prism, typically perpendicular to the long axis of the microprism. However, a light control layer comprising a two dimensional structure is also envisaged wherein the optical effect due to the presence of the microprismatic structure is readily observed at two or more rotational viewing directions. Examples of such a two-dimensional microprismatic structure include corner cubes and pyramidal structures. In a comparative example, the light control layer may comprise a lenticular array having a curved surface structure.

The pitch of the surface structure of the light control layer (e.g. the width of a microprism) is preferably in the range of 1-100µm, more preferably 5-70µm, and the height of the surface structure (e.g. the height of a microprism) is preferably in the range of 1-100µm, more preferably 5-40µm.

Step (ii) of the first aspect of the invention comprises selectively modifying a part of the light control layer so as to generate a second optical effect different from the first optical effect. As explained above, the presence of a light control layer covering at least a part of the colour shifting element provides a different optical effect to a viewer than if the colour shifting element were present in isolation.

The fact that the light control layer has a surface structure comprising one or more elevations and depressions allows for easy modification of the surface structure in order to provide personalisation to the security document. It is important to note that when the selective modification is carried out, it is the security document substrate as a whole that is being modified, as the security device is integrated within the security document substrate. For example, it is envisaged that a plurality of passport security page substrates may be provided. Each of the provided substrates comprises a security device with the same light control layer and therefore exhibits the (same) first optical effect. By selectively modifying the light control layers present on each substrate, each finished passport security page will comprise unique personalised information. The unique personalised information is revealed to the viewer due the second optical effect exhibited by the modified part of the light control layer being different to the first optical effect.

Preferably, at least at one viewing angle, the first optical effect exhibits a first colour, and the second optical effect exhibits a second colour different from the first colour. This means that the part(s) of the light control layer that were selectively modified exhibit a different colour from the non-modified parts(s) when the finished security document is tilted, and therefore the modified part(s) stand out to the user in a memorable manner. This difference in optical effect advantageously allows indicia to be introduced to the security device of the security document through the selective modification of the light control layer. Such indicia may include biometric data relating to a passport holder (for example an image of the passport holder) or a serial number in a security label.

The second optical effect may be the optical effect generated by the colour shifting element in the absence of a light control layer. In other words, the part(s) of the light control layer that are modified are effectively made "non-functional" such that they have negligible effect on the light from the colour shifting element. In the example above where the first optical effect is a red to blue colour shift, modifying a part of the light control layer such that the second optical effect is the optical effect generated by the colour shifting element in the absence of a light control layer would provide for a red to green colour shift in the modified "non-functional" part(s) of the light control layer. If the light control layer were to be modified in such a manner so as to define indicia, the finished security document, upon tilting, would exhibit green coloured indicia against a blue background.

If the light control layer is selectively modified such that the modified "non-functional" part(s) of the light control layer are on a scale that is not perceptible (i.e. resolvable) to the naked human eye (typically less than 150µm, preferably less than 100 µm and even more preferably less than 70µm), then the resulting optical effect exhibited to the viewer by the modified light control layer will be a combination of the first and second optical effects. This is typically experienced as a "mixing" of the colours produced by the first and second optical effects exhibited by adjacent modified and unmodified parts of the light control layer. Dependent on the ratio of the modified and non-modified part(s) of the light control, different colours may be seen upon tilting due to the combination of the first and second optical effects. Therefore modifying the light control layer of a security document substrate in such a manner advantageously provides an alternative or complimentary means of producing personalised, unique security document.

The selectively modifying may comprise introducing a material to a part of the light control layer. Typically, the material is introduced into at least one depression in the surface structure of the light control layer, for example into a region located between microprisms of a microprismatic structure. The introduction of a material to a part of the light control layer modifies the light control layer at that part and therefore modifies the effect that the light control layer has on light from the colour shifting element, creating a second optical effect. By adding material in such a manner, the second optical effect can be applied to an area of the security device relating to indicia, for example an image or a serial number.

Typically, the material added to the light control layer has a refractive index substantially the same as that of the light control layer. This enables regions of the light control layer to be "blanked out" and made non-functional such that the second optical effect is the same as the optical effect if there were no light control layer present. In other words, the optical effect generated by the "blanked out" regions is the same as the optical effect generated solely by the colour shifting element. In order that the modified part(s) of the light control layer provide the same optical effect as the colour shifting element in isolation, the material is added such that the light control layer at the modified part comprises a planar region having a planar surface substantially parallel with the colour shifting element. However, it is envisaged that material having a different refractive index may be added to the light control layer in order to generate different optical effects.

Preferably, the material is a printable resin, and can be selectively introduced to a part of the light control layer by digital printing. The digital printing may be ink jet printing or laser printing for example. This feature of the invention is particularly advantageous. For example, a passport manufacturer may be provided with a security document substrate with a security device comprising a colour shifting element and a light control layer already integrated into the security document substrate. The passport manufacturer may then personalise each passport by digitally printing, onto the light control layer of the security device, material that modifies the light control layer such that the printed areas containing material generate a second optical effect different from the "original" first optical effect. For example, biometric data relating to the owner of the passport may be printed onto the security device in order to personalise the passport.

This is particularly beneficial as the personalisation can be carried out as a final step in the production of the passport (or other security documents such as identity cards or driving licences), rather than a security device manufacturer having to produce a large number of unique individualised security devices for subsequent integration into security documents.

Digital printing advantageously allows for high spatial accuracy in the modification of the light control layer, thereby providing the ability to create indicia with high levels of detail that are difficult to counterfeit and yet relatively straightforward to produce.

Examples of materials that may be added to the light control layer in order to selectively modify it include UV curable inkjet inks such as Mimaki^{®} UV ink Clear 031-38U069C. Other suitable materials for UV curable inkjet include polyfunctional terminally unsaturated organic compounds including the polyesters of ethylenically unsaturated acids such as acrylic acid and methacrylic acid and a polyhydric alcohol. Examples of some of these polyfunctional compounds are the polyacrylates and polymethacrylates of trimethylolpropane, pentaerythritol, dipentaerythritol, ethylene glycol, triethylene glycol, propylene glycol, glycerin, sorbitol, neopentylglycol, 1,6-hexanediol and hydroxy-terminated polyesters, hydroxy-terminated epoxy resins, and hydroxy-terminated polyurethanes. Also included in this group of terminally unsaturated organic compounds are polyallyl and polyvinyl compounds such as diallyl phthalate and tetraallyloxyethane and divinyl adipate, butane divinyl ether and divinylbenzene.

In a further example, the material added to the light control layer may be a varnish, which may be a water based varnish or a UV curable varnish. The varnish may be typically applied by one of flexographic, lithographic or screen printing. Suitable UV curable materials may comprise a resin which may typically be of one of two types, namely:
a) Free radical cure resins, which are typically unsaturated resins or monomers, pre-polymers, oligomers and the like containing vinyl or acrylate unsaturation for example, and which cross-link through use of a photo initiator activated by the radiation source employed, for example UV radiation.
b) Cationic cure resins, in which ring opening (e.g. epoxy types) is effected using photo initiators or catalysts which generate ionic entities under the radiation source employed, for example UV radiation. The ring opening is followed by intermolecular cross-linking.

The radiation used to effect curing is typically UV radiation but could comprise electron beam, visible, or even infra-red or higher wavelength radiation, depending upon the material, its absorbance and the process used. Examples of suitable curable materials include UV curable acrylic based clear embossing lacquers or those based on other compounds such as nitro-cellulose. A suitable UV curable lacquer is the product UVF-203 from Kingfisher Ink Limited or photopolymer NOA61 available from Norland Products. Inc., New Jersey.

The curable material could be elastomeric and therefore of increased flexibility. An example of a suitable elastomeric curable material is aliphatic urethane acrylate (with suitable cross-linking additive such as polyaziridine).

Suitable water based varnishes include include vinyl resins such as UCAR^{™} VMCA Solution Vinyl Resin or UCAR^{™} VCMH Solution Vinyl Resin, both of which are supplied by The Dow Chemical Company and which are carboxy-functional terpolymers comprised of vinyl chloride, vinyl acetate and maleic acid. Varnishes including polyurethane resins are also suitable.

The invention may be particularly advantageous in the production of bank notes containing a security thread for example. In this case, the security thread acts as a security device, and may be produced as a "blank" security thread, where the light control layer covers the entirety of the colour shifting element such that the entirety of the security thread exhibits the same first optical effect. A bank note substrate having such a "blank" security thread integrated therein may be provided and the bank note substrate subsequently personalised by adding varnish in a pattern conforming to desired security indicia. This is particularly advantageous as the application of a varnish is typically the last step in bank note production. A further benefit is that it is conventionally difficult to ensure that any indicia on a bank note thread are in register with their respective window regions on the substrate. The present invention allows for simple registration of such indicia by simply applying varnish at the desired locations.

Alternatively or in addition to the addition of material to the light control layer, the selectively modifying may include removing at least a part of the light control layer such that no light control layer is present at that part of the security device. In a similar manner to the addition of material, removing at least a part of the light control layer modifies the optical effect produced by the modified part(s) of the security device. For example, at least one elevation of the surface structure of the light control layer may be removed such that, at that part of the security device, no light control layer is present, meaning the optical effect provided by part of the security document is the optical effect generated by the colour shifting element in isolation. In the case where the light control layer comprises a microprismatic structure, selected microprisms may be removed for example. By removing part(s) of the light control layer in accordance with desired indicia, the security document can be personalised in a similar manner to that described above in relation to the addition of material.

The selective modification may comprise deforming at least a part of the light control layer. Here the term "deforming" means changing the structure of the light control layer. Typically in this instance, at least one elevation of the surface of the light control layer is deformed so as to form a planar region of the light control layer such that the second optical effect at that region of the security document is the optical effect generated by the colour shifting element in the absence of a light control layer. The planar region is substantially parallel with the plane of the colour shifting element.

Typically, in the case where the selective modification of the light control layer includes removing or deforming at least a part of the light control layer, the light control layer is a heat transformable material, and in such a case, the removal or deformation of at least a part of the light control layer comprises applying heat energy to the heat transformable material. This is typically done using a radiation source such as a laser through a laser ablation process, or by applying heat energy through thermal conduction with an applied member such as a linear or rotary embossing die in a so-called "hot-embossing" process. Such an embossing die will comprise a surface relief corresponding to the desired modification of the light control layer.

In a similar manner to digital printing, the use of a laser or embossing die allows accurate and fast modification of the light control layer so as to define indicia, allowing for fast easy and efficient personalisation of security documents.

It is envisaged that the three forms of selectively modifying the light control layer described above (the addition of material, the removal of a part of the light control layer and the deforming of a part of the light control layer) may be applied either individually or in combination.

As described above, the selective modification may be carried out so as to define a pattern related to the security document. For increased security, this may be a pattern unique to the security document. As an example, the light control layer may be selectively modified so as to define biometric data related to the security document owner, such as finger print data or an image of the owner. This is particularly appealing in the field of passports where, for example, in a "post-processing" process, an image of the passport holder can be introduced into a security device integrated within a passport security page substrate by selectively modifying regions of the light control layer so as to define the image.

The method is particularly beneficial when a "blank" security device (i.e. where each security device comprises the same light control layer) is integrated into a number of security document substrates, and the selective modification of the device (which is already integrated into the security document substrate) is performed as one of the final steps in the production of the finished security document.

The light control layer typically comprises a polymer (examples of which have been outlined above in the discussion of materials that may be added to the light control layer), and may be formed by a number of different processes including embossing, extrusion and cast curing. In the case of a bank note thread for example, such a polymer light control layer may be formed by forming a layer of UV curable polymer over a colour shifting material and subsequently embossing and UV curing the polymer to form the desired surface structure. In the case of a security sheet for a passport, such a security sheet is typically formed from a laminar structure made up of a plurality of planar polymer layers. The colour shifting element may be introduced into the laminar structure either before the laminating process, or afterwards through the use of a "plug" as is known in the art. The light control layer may then be formed in the top surface of the security sheet substrate, for example by embossing. In such an instance, the colour shifting element and the light control layer form the security device integrated within the security page substrate.

As described above, a particularly advantageous implementation of the present invention is where the light control layer is selectively modified so as to define a pattern related to the security document. This may be biometric data related to the owner of the security document, or a serial number on a security label for example. The pattern may be unique to the security document. As will be appreciated, by supplying a security document substrate which already comprises a security device, and then selectively modifying the light control layer of the security device (and therefore modifying the security document substrate itself), the present invention allows for efficient production of unique security documents.

The light control layer may be selectively modified so as to define first and second regions of the light control layer, wherein the first and second regions provide different optical effects. Typically just regions will be exhibited as areas of different colour when the finished security document is tilted.

The method may further comprise the step of performing at least one finishing process, for example a cutting, stacking or batching process.

The present invention may be directed to a number of different security documents, including passports, banknotes, security labels, identification cards, driving licences or any other documents of value. The present invention allows for efficient personalisation of such security documents with difficult to counterfeit, unique security devices.

In accordance with a second aspect of the invention, there is provided a security document formed by the method of the first aspect of the invention.

Preferably, the light control layer of the security document is selectively modified to define indicia unique to the security document. As described above, this may be biometric data related to a passport owner, where the biometric data is defined on a security page of the passport. As a further example, the security device may be a security thread integrated with the security document substrate, wherein the security document substrate has on at least one surface at least one windowed region in which the thread is exposed at the substrate surface, and at least one region in which the thread is not exposed, and wherein; the light control layer is selectively modified so as to define indicia on the security thread. This is particularly beneficial in banknote production, but may also be applied to other documents of value such as passports. The scenario where the security device is a security thread integrated within the security document substrate is a particularly advantageous example of the invention as subsequent selective modification of the light control layer on the security thread allows for ease of registration of indicia or motifs with the windowed region(s) on the substrate. This will be described in further detail in the detailed description below.

### BRIEF DESCRIPTION OF THE DRAWINGS

Examples of the present invention will now be described with reference to the attached drawings, in which:
Figures 1a and 1b are schematic cross-sectional diagrams of the effect of light incident upon a colour shifting element, with and without the presence of a light control layer;
Figures 1c and 1d are schematic cross-sectional diagrams of the effect of selective modification on the light control layer;
Figure 2 illustrates a schematic side-on view of passport security page substrate for a passport security page;
Figure 3 schematically illustrates a process for forming a finished passport security page;
Figure 4 illustrates a simplified top view of a finished passport security page;
Figure 5 illustrates an example in which a "blank" passport security page substrate is selectively modified in order to form a finished security page;
Figure 6 is a schematic cross-section of a security label substrate;
Figures 7a and 7b schematically illustrate ways in which a light control layer of a security label substrate may be selectively modified;
Figures 8a and 8b illustrate examples security labels formed by the method of the present invention;
Figure 9 is a schematic drawing of a finished bank note;
Figure 10 is a schematic side view of an example security thread;
Figure 11 is a plan view of a blank bank note substrate;
Figures 12 to 18 are aerial views of various surface reliefs that may be used in a light control layer according to examples of the present invention;
Fig. 19 is an aerial view of a comparative light control layer.
Figure 20 is a flow diagram outlining the steps of an example method according to the invention, and;
Figures 21 to 24 illustrate examples of security document substrates that comprise security devices that may be selectively modified.

### DETAILED DESCRIPTION

Figures 1a to 1d outline the general principles upon which the present invention is based. Figure 1a is a schematic cross-sectional diagram of the effect of light incident upon a colour shifting element 10. All types of colour shifting materials may be used as the colour shifting element in the present invention, including *inter alia* photonic crystals, liquid crystals, interference pigments, pearlescent pigments, structured interference materials or thin film interference structures including Bragg stacks.

When light strikes the colour shifting element 10, some of the light is reflected. The wavelength of the reflected light depends on the structure and composition of the colour shifting material 10 and the reflected light will appear coloured to the viewer 50. The wavelength of the reflected light is also dependent on the angle of incidence, which results in a colour change perceived by the viewer 50 as the colour shift layer is tilted relative to the viewer.

The optical effects of the colour shifting element 10 are illustrated schematically in Figure 1a by light rays 1, 3 and 5 shown at angles of incidence Θ_{1,} Θ₂ and Θ₃ respectively, where Θ₁ < Θ₂ < Θ₃. Due to the colour shifting properties of the colour shifting element 10, light incident upon the colour shifting element 10 with an angle of incidence Θ₁ will appear red (R) to the viewer 50, and light incident with an angle of incidence Θ₂ will appear green (G). At a greater angle of incidence Θ₃, light reflected by the colour shifting element 10 will have a wavelength corresponding to a blue colour (B), but will be totally internally reflected and therefore not observable to the viewer. The colour shifting material 10 will therefore exhibit a red to green colour shift when viewed and tilted away from a normal angle of viewing.

The colour shifting element 10 can be viewed either in reflection or transmission. In the case of viewing in reflection, it is desirable to place a dark absorbing layer (shown at 12) beneath the colour shifting element 10 in order to absorb the transmitted light. This is particularly beneficial if the colour shifting element is partially transparent to visible light (for example a cholesteric liquid crystal layer). If a substantially opaque colour shifting element (such as a printed ink comprising an optically variable pigment) is used, such an absorbing layer 12 is not required.

Figure 1b schematically illustrates a light control layer 20 positioned in contact with a top surface of the colour shifting element 10 such that the light control layer 20 is situated between the colour shifting element 10 and the viewer 50. The light control layer preferably has a microprismatic structure (here an array of symmetrical linear triangular microprisms 20a, 20b, 20c having equal length facets 22, 24 at an angle α to the colour shifting element 10 and having long axes that extend into the plane of the page) having a series of elevations and depressions shown generally at 26 and 28 respectively, and comprises a substantially transparent material such that light is able to pass through it. As seen by the light rays in Figure 1b, the light control layer refracts the light incident to, and reflected from, the colour shifting element 10. More specifically the red to green colour shift is observed at angles closer to a normal angle of viewing. Furthermore, due to the smaller difference in refractive index between the colour shifting element 10 and the light control layer 20 than between the colour shifting element 10 and the air, and the angled facets of the light control layer, blue light is no longer totally internally reflected by the light control layer and is instead observable to the viewer, as shown schematically in Figure 1b at the light ray labelled B. The presence of light control layer 20 as seen in Figure 1b therefore exhibits a red to blue colour shift effect to the viewer upon tilting, and this effect is observable closer to normal angles of viewing as compared to the colour shifting element 10 in isolation.

The light modification properties of the light control layer are most noticeable when the device is viewed in a direction perpendicular to the long axes of the microprisms of the light control layer.

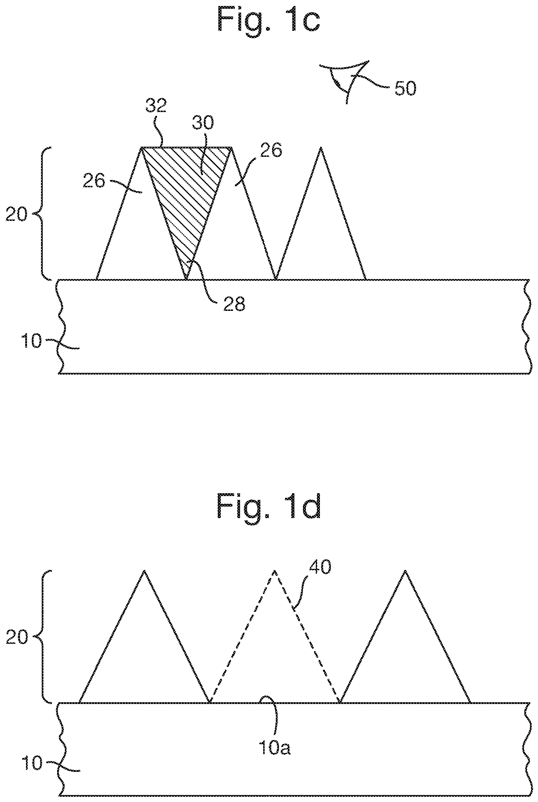

Figure 1c schematically illustrates a first type of modification of the light control layer 20. A resin 30 is introduced into a depression 28 within the microprismatic structure of the light control layer 20, and the interstitial space between adjacent microprisms is substantially filled such that the modified part of the light control layer comprises a planar surface 32 extending between the peaks 26 of adjacent microprisms of the light control layer and parallel with the light control element 10.

Preferably the resin 30 has a refractive index substantially identical to that of the light control layer 20 such that the modified part of the light control layer 20 takes the form of an optically homogenous planar layer. This means that the light reflected from the colour shifting element 10 is not significantly refracted by the modified part of the light control layer 20 and the viewer 50 therefore perceives a colour shifting effect substantially the same as if the light control layer were not present at that part. For example, at the modified part of the light control layer, blue light from the colour shifting element will be totally internally reflected at the interface between the resin 30 and the air such that a red to green colour shift will be exhibited to the viewer rather than a red to blue colour shift. Therefore such a modified part of the light control layer may be described as "non-functional".

Figure 1d illustrates a second modification of the light control layer 20, more specifically removal of a part of the light control layer 20. Here a portion (illustrated at 40) of the light control layer 20 is removed in order to expose a part 10a of the colour shifting element 10. Therefore, light rays reflected within the colour shifting element 10 and leaving the colour shifting element at part 10a will not be refracted by the light control layer 20 and as such the effect exhibited to the viewer 50 will be the original red to green colour shift due to the colour shifting element rather than the red to blue colour shift due to the light control layer.

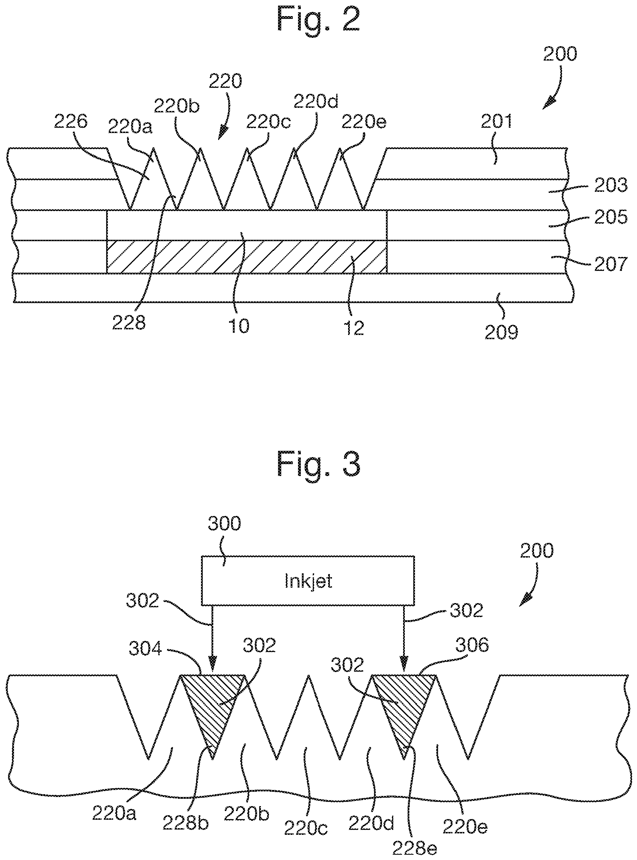

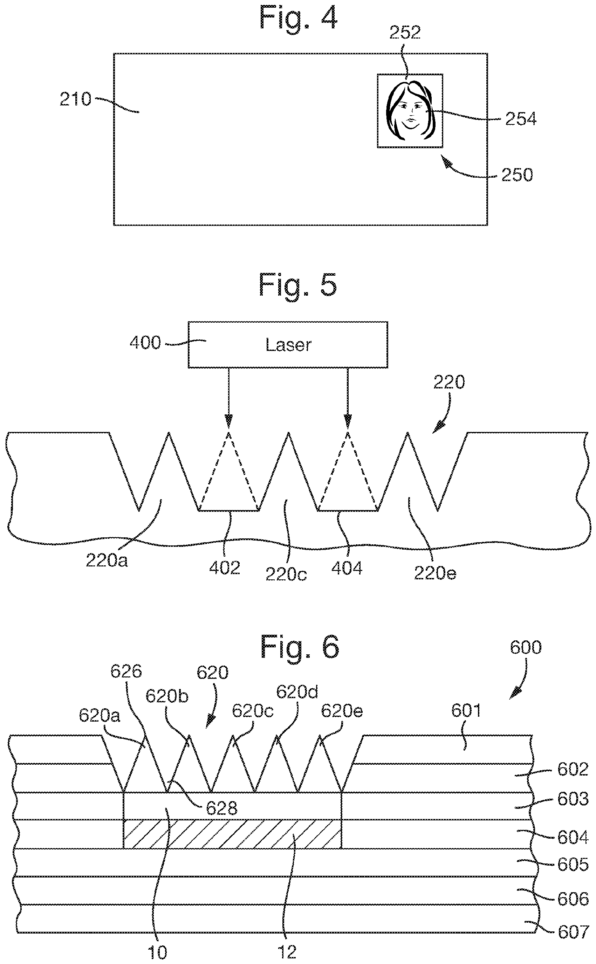

Figure 2 illustrates a schematic side-on view of passport security page substrate 200 for a passport security page 210 (see Figure 4). Such a security page 210 is provided within the passport booklet and is usually the second or penultimate page, typically located between one of the visa pages and the cover. The security page substrate 200 comprises a plurality of planar layers 201, 203, 205, 207 and 209 fused together to form a laminar structure which is rigid or semirigid. The layers are typically comprised of a thermoplastic polymer such as polycarbonate or polyethylene and are fused together by a laminating process as is known in the art. Examples of specific materials for the polymer layers include polycarbonate and polyethylene terephthalate glycol-modified (PETG).

The security page substrate 200 comprises opposing outer layers 201, 209 and a plurality of interior layers 203, 205 and 207. In this example, a colour shifting element 10 is provided on second interior layer 205 and an absorbing layer 12 is provided below and in register with the colour shifting element on third interior layer 207. Here "in register" means that the colour shifting element and absorbing element are substantially aligned in a direction normal to the layers (i.e. overlapping) and in the same relative positions in a plurality of security page substrates. A light control structure 220 is provided above and in register with the colour shifting element 10, and extends through the top outer layer 201 and first internal layer 203 such that the light control structure 220 is substantially adjacent the colour shifting element 10 and takes the form of a layer directly above the colour shifting element 10. In other examples, the light control structure and the colour shifting element may be spaced apart by one or more regions of transparent material (such as transparent polycarbonate) such that the colour shifting element is visible through the light control structure. In this example the light control structure 220 extends through the top outer layer 201 and the first internal layer 203. However, in other examples, the light control structure may extend through only the top outer layer, or through more than one internal layer depending on the construction of the security page substrate and positioning of the colour shifting element.

The colour shifting element 10 and absorbing layer 12 may be provided on their respective layers prior to the fusing step, or may be inserted as a "plug" into the substrate after the layers have been fused together, as is known in the art.

The light control structure 220 comprises a microprismatic structure comprising an array of linear symmetrical triangular microprisms 220a, 220b, 220c, 220d and 220e defining a series of elevations 226 and depressions 228. The long axes of the microprisms extend into the plane of the page. Typically, the light control structure 220 is formed by a hot embossing process, where the initially planar layers 201 and 203 are brought into intimate contact with a heated embossing cylinder or die, the surface of which comprises a series of elevations and depressions corresponding to the desired microprismatic structure.

Together, the colour shifting element 10 and the light control structure 220 define a security device embedded within the passport security page substrate 200.

Typically the opposing outer layers 201 and 209 are substantially transparent, as well as the first internal layer 203. Internal layers 205 and 207 are typically substantially opaque. The topmost outer layer 201 and the first internal layer 203 are substantially transparent such that the colour shifting element 10 is visible through the top of the passport security page substrate. However, first internal layer 203 may alternatively be substantially opaque and comprise a window region in register with the colour shifting element 10 such that the colour shifting element 10 is visible through the topmost outer layer 201.

Figure 3 schematically illustrates a process for forming a finished passport security page 210 from the substrate 200, according to the invention. An inkjet printer 300 is used to selectively introduce a substantially transparent resin 302 into the depressions 228b, 228e within the light control structure 220. The resin 302 has substantially the same refractive index as that of the layers 201, 203 in which that light control structure 220 is formed. In Figure 3, resin 302 has been selectively introduced into depressions 228b and 228e within the light control structure 220 in order to form planar regions 304 and 306 having a planar surface parallel with the colour shifting element 10. In other words, the resin has been introduced such that the interstitial spaces between adjacent microprisms 220a and 220b, and between adjacent microprisms 220d and 220e, are substantially filled. Examples of suitable printable materials have been discussed in the summary of the invention section.

As described with reference to Figure 1b, the introduction of the resin 302 in order to modify the light control structure 220 means that two optical effects are exhibited to the viewer. In the unmodified region of the light control structure 220 where no resin has been added (for example microprism 220c), the viewer of the finished passport security page 210 will see a red to blue colour shift when the page is tilted, and the modified regions will exhibit a red to green colour shift when the page is tilted.

Advantageously, this allows the resin 302 to be introduced to the light control structure 220 so as to define indicia on the finished passport security page 210, wherein the indicia are viewable upon tilting of the passport page such that the different optical effects are exhibited. For example, in the case of a passport security page, the indicia may be biometric data related to the holder of the passport, such as a portrait of the passport holder, as schematically illustrated in Figure 4.

Figure 4 illustrates a simplified top view of the finished passport security page 210, formed from security page substrate 200. The finished security page 210 comprises a security device 250 defined by the colour shifting element 10, absorber layer 12 and the modified light control structure 220. Under normal incidence viewing, the portrait and the background will have substantially the same colour (the portrait may be weakly visible due to the difference in gloss); however, upon tilting of the security page, the portrait 254 will be visible to a viewer in a different colour to the background. The resin may be introduced to the light control structure 220 so as to define the outline of the portrait, in which case, upon tilting of the security page 210, the portrait 254 will appear green against a blue background 252. Alternatively, the resin may be introduced as a portrait "negative" such that the portrait 254 will appear blue against a green background 252 when the page is tilted. An inkjet printer 300 (or alternatively a laser printer) provides accurate manipulation of the introduction of the resin to the light control structure 220 in order to provide for high quality, difficult to counterfeit security devices. However, other means of introducing the resin to the light control structure are envisaged.

The above description therefore describes how a "blank" passport security page substrate 200 may be provided that is then personalised in order to generate a unique finished security page 210 containing personal biometric data in the form of a difficult to counterfeit security device 250. Here the term "blank" is used to describe the manner in which each passport security page comprises a "blank" security device comprising an unmodified light control layer. In other words, the security device in each blank security page substrate will exhibit the same colour shifting effect. However, as described above, upon modification of the blank substrate, a finished security page 210 is produced, including a unique security device.

It is envisaged that this modification of the security page substrate 200 may be one of the final processing steps in the production of the passport security page. Advantageously, being able to modify the security page substrate 200 as a single entity prevents the requirement for a plurality of separate individual security devices to be manufactured, logged, and inserted into the correct documents.

In the case of a security page substrate comprising a plurality of polycarbonate layers as described above, a portrait may be laser marked into one of the layers in a manner as is known in the art, and the light control layer subsequently modified in order to provide a portrait matching the laser marking that is visible upon tilting of the security page.

Figure 5 illustrates an alternative manner in which the "blank" passport security page substrate 200 seen in Figure 2 can be modified in order to form a finished security page 210 comprising a unique security element 250. Instead of introducing resin to the light control structure as described above with reference to Figure 4, a part or parts of the light control structure 220 can be selectively removed in order to define the required indicia. This is illustrated in Figure 5, where a laser 400 is used to remove the microprisms 20b, 20d (shown in dotted lines) from the light control structure through a laser ablation process in order to form gap regions 402 404 in the light control layer. No light control layer 20 is present in the gap regions 402, 404, thereby exposing the colour shifting element.

Therefore, in the modified regions 402, 404 of the light control structure 220, light reflected from the colour shifting element 20 will exhibit the same optical effect as if the light control layer were not present, i.e. a red to green colour shift.

Alternatively, instead of removing part(s) of the light control layer 20, the light control layer 20 may be selectively deformed in order to leave a planar region of light control layer substantially abutting the colour shifting element so as to effectively define a gap region 402, 404 as above.

This technique can be used to obtain the same effect as described above in relation to Figure 4. If the light control structure 220 is modified such that the modified portions define the outline of a portrait of the passport user, the portrait will appear green against a blue background upon tilting the passport security page 210. Conversely, portions of the light control structure may be removed such in "negative" that the portrait appears blue against a green background upon tilting the passport security page.

Although the Figure 5 process has been described in relation to using laser ablation, it will be understood by the skilled person that other means of deforming or removing part(s) of the light control structure are envisaged. For example, where the light control structure 220 of the security page substrate 200 comprises a heat-transformable material (i.e. where the topmost outer layer 201 and first internal layer 203 comprise a heat-transformable material), heat energy may be supplied in order to selectively deform or remove part(s) the light control structure 220 by a production tool such as an embossing die, wherein the embossing die has a series of protrusions corresponding to the desired microprismatic structure of the light control structure.

Furthermore, it is envisaged that the modification of the light control structure 220 may comprise a combination of two or more of the introduction of a resin, the removal of at least a part of the light control layer and the deforming of at least a part of the light control structure.

The above description in relation to Figures 2 to 5 has been directed towards passport documents. However, it will be appreciated that the same techniques can be applied to other personalisable documents of value such as identification cards, security labels and driving licences, which may benefit from a security device comprising biometric data relating to the owner. As a further example, Figures 6 to 8 illustrate how the invention can be applied to a security laminate, which could be used for example in a driving licence.

Figure 6 is a schematic cross-section of a security laminate 600. Similarly to the passport security page substrate, the security laminate 600 comprises a plurality of planar layers fused together to form a laminar structure, typically through a lamination process as is known in the art. The security laminate 600 comprises opposing outer layers 601 and 607, and a plurality of interior layers 602, 603, 604, 605 and 606 positioned between the outer layers 601 and 607. A light control structure 620 is formed in a top portion of the security laminate 600 and, in this example, extends through the topmost outer layer 601 and first interior layer 602 and comprises a plurality of symmetrical linear microprisms 620a, 620b, 620c, 620e and 620f having their long axes extending into the plane of the page, and defining a series of elevations 626 and depressions 628. In other examples the light control structure may extend through only the top outer layer, or through more than one internal layer depending on the construction of the security laminate and positioning of the colour shifting element. The light control structure 620 is typically formed by a hot embossing process as described above in relation to the passport security page.

A colour shifting element 10 is positioned on second interior layer 603 immediately below and in register with the light control structure 620. However, as described above, the colour shifting element and light control structure may be spaced apart by one or more layers comprising substantially transparent regions. An absorbing element 12 is located on third interior layer 604 immediately below and in register with the light control structure. Typically, layers 601, 602 and 607 are substantially transparent, with the remainder of the layers substantially opaque. However, as with the passport security page example, the first interior layer 602 may be substantially opaque and comprise a window region in register with the colour shifting element such that the colour shifting element 10 is visible through the light control structure 620.

Together, the colour shifting element 10 and the light control structure 620 define a security device embedded within the security laminate 600.

In the case of the security laminate 600, fourth interior layer 605 may comprise a tamper-evident element (not shown), and the fifth interior layer 606 may comprise an adhesive (not shown) such that, upon removal of outer layer 607, the security laminate 600 may be attached to an item of value.

Figure 6 illustrates a "blank" security label laminate 600 meaning that each such security laminate comprises a "blank" security device having an unmodified light control layer. The light control layer of such a blank security laminate 600 may be modified in order to produce a unique finished security document 610, such as a driving licence.

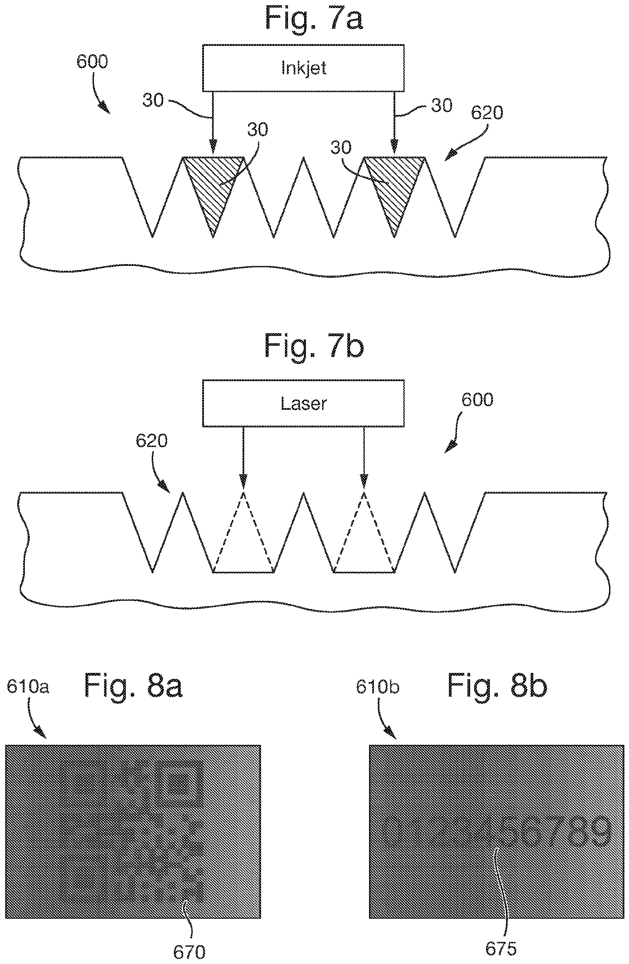

Such modification is schematically illustrated in Figures 7a and 7b, which are analogous to Figures 3 and 5. In Figure 7a, resin 30 is introduced to light control structure 620 in order to define indicia in the same manner as described in relation to Figures 1c and 3. In Figure 7b, the light control structure 620 is modified in order to define indicia through deformation or removal of at least a part of the light control layer in the same manner as described in relation to Figures 1d and 5.

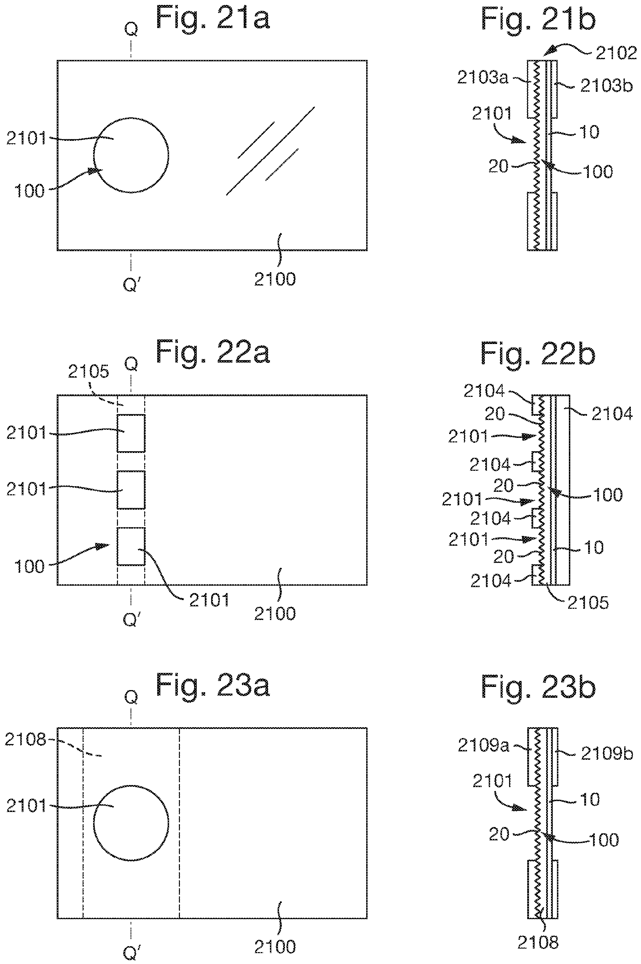

Figures 8a and 8b illustrate examples of finished security labels 610a, 610b that were both formed from a blank substrate, which may have a structure similar to that described in Figure 6, or may have a structure similar to a security thread as described in Figure 22, with an adhesive layer on one side. Figure 8a illustrates a security label 610a wherein the blank substrate was modified so as to exhibit a quick response code 670 that is viewable by tilting of the security label due to the differing optical effects provided by modified and unmodified parts of the light control structure. Similarly, Figure 8b illustrates a security label 610b where the blank substrate was modified so as to exhibit a security code 675.

The present invention is particularly beneficial for producing security labels, which are inherently difficult to secure. For example, a batch of "blank" security label substrates may be provided to a manufacturer who wishes to provide a secure security label to each manufactured product. Each "blank" security label substrate contains a colour shifting element and a light control structure defining a blank security device. The goods manufacturer may then use inkjet printing to print a unique security code onto the light control structure integrated within the security label substrate. Therefore, each finished security label will comprise a unique security code that is visible upon tilting due to the different optical effects exhibited to the viewer by the modified and unmodified parts of the light control structure, thereby adding a further element of security to the label in addition to the code (which typically would be printed in a conventional manner and easy to replicate).

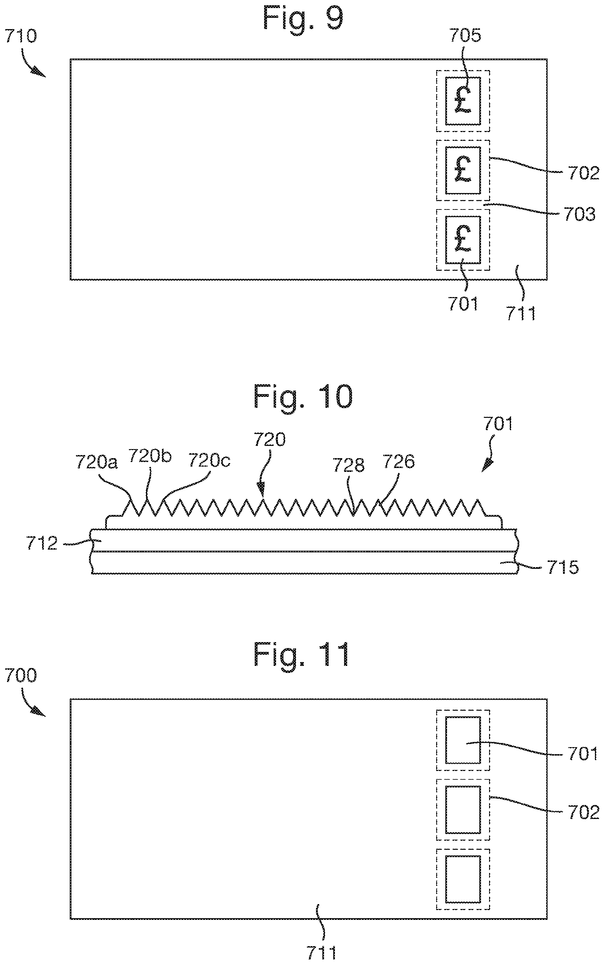

The present invention also has particular application in bank note production. Figure 9 is a schematic drawing of a finished bank note 710 having a windowed security thread 701 passing though it between opposing long edges (in some examples the bank note may only have one window, rather than a series of windows). The security thread is typically inserted during paper-making such that it is partially embedded into the paper so that portions of the paper lie on either side of the thread. This can be done using the techniques described in EP0059056 where paper is not formed in the window regions during the paper making process thus exposing the security thread in window regions of the banknote. Alternatively the window regions may for example be formed by abrading the surface of the paper in these regions after insertion of the thread. It should be noted that it is not necessary for the window regions to be "full thickness" windows: the thread need only be exposed on one surface if preferred. The security thread may be incorporated into a paper or polymer base substrate so that it is viewable from both sides of the finished security substrate at at least one window of the document. Methods of incorporating security devices in such a manner are described in EP-A-1141480 and WO-A-03054297. In the method described in EP-A-1141480, one side of the security element is wholly exposed at one surface of the substrate in which it is partially embedded, and partially exposed in windows at the other surface of the substrate.

In figure 9 a series of window regions 702 are illustrated, so as to expose the thread 701 embedded therein. Each windowed area has the geometry of a rectangle. Between adjacent window regions there are positioned bridge regions 703 where the thread remains buried within the substrate material 711. For enhanced security, the thread 701 may have indicia 705 thereon that are viewable in the window regions for enhanced security. However, it is difficult to provide such indicia to the thread in a manner that allows for ease of registration with the window regions.

A significant security benefit would be gained if indicia on a windowed security thread could be positioned in register with the windowed areas. To date, such registration capability remains impractical since current production processes do not permit threads to be registered to achieve these desired effects. Instead, an arbitrary offset occurs between the bridge positions and thread design, giving rise to ill-centred or incomplete images in the window. Not surprisingly attempts have been made to adjust the relative position of the thread to the window during the paper making process. Most notably trials have been undertaken to adjust the tension on the thread-feed during the paper making process. These have experimented with a closed loop feedback architecture, where a control signal is derived from an image capture system monitoring a selected window position. However, in practice, this approach has proved to be particularly difficult to implement, and little success has been achieved for anything other than particularly narrow threads. The desire to achieve registration between images upon threads and the windows of the substrate remains strong. Most broadly, the goal is to find a method to facilitate the arbitrary positioning of images and motifs relative to the thread window, or (if required) the positioning of arbitrary and differing designs in each window. Furthermore an additional challenge is faced in that, in practice, such a method would need to integrate readily with the normal established processes of security document production, not least since such processes are required to meet the most exacting of production standards. It is standard practice/known in the security industry that unprinted banknote paper can be supplied to State Print works/other commercial printers as a substrate to print on. This substrate regularly contains finished security threads. An advantage of the current invention described is that it allows the personalisation/finishing of the security thread by the banknote printer thus enabling the banknote printer to customise the security thread. The customisation may take place before or after the banknote paper is printed with the conventional banknote printing operations and in addition to the indicia being in register to the windows the indicia can also be register to the conventional banknote print design.

The present invention provides a solution to this problem, as will be explained below.

Figure 10 is a schematic cross-sectional drawing of a bank note thread 701 for use with the present invention prior to being introduced to a bank note substrate material. The bank note thread 701 is elongate and comprises a thread substrate 715, typically a transparent polymeric substrate such as PET or biaxially orientated polypropylene (BOPP). In the example of Figure 10, a substantially opaque colour shifting element such as a printed ink comprising an optically variable pigment is provided on the thread substrate. A light control layer 720 is then formed on colour shifting element 712. However, in other examples, a partially transparent colour shifting element may be provided, in which case an absorbing element may be positioned on a distal side of the colour shifting element with respect to the light control layer. In other examples, the colour shifting element (and optionally an absorbing element) may be provided on an opposing side of the transparent substrate to the light control layer, with the colour shifting element being visible though the light control layer through the transparent substrate. Where an absorbing element is provided, the absorbing element may be patterned so as to define indicia. Where a substantially opaque colour shifting element is used, the colour shifting element itself may define indicia. Figure 10 shows the colour shifting element 712 in contact with the substrate 715 and light control layer 720, although this is not required.

The light control layer 720 comprises a microprismatic structure comprising a plurality of linear microprisms 720a, 720b, 720c.... defining a plurality of elevations (shown generally at 726) and depressions (shown generally at 728). The long axes of the microprisms extend into the plane of the paper.

There are a number of ways of manufacturing and applying the light control layer 720 to the thread 701. In a first method, an all over UV curable resin coating is applied to the colour shifting element 712. The colour shifting element 712, with the UV curable resin coating thereon, is then held in intimate contact with a production tool in the form of an embossing cylinder, wherein the microprismatic structure defined on the production tool is replicated in the resin. UV light is used at the point of contact to cure and harden the resin. Ideally, the production tool is transparent (e.g. made from quartz) and a UV light is positioned inside so that the resin is cured immediately after being cast.

Alternatively, the light control layer may be formed on a carrier layer using the method described above and then transferred with the carrier layer in a separate process such that the carrier layer is adjacent the colour shifting element 712. Alternatively the colour shifting element may be introduced and adhered to the light control layer formed in such a manner.

In an alternative method, the light control layer 720 is formed by coating the colour shifting element 712 with a thermoplastic embossing lacquer and then using an embossing tool to create the light control layer with the application of heat and pressure.

The bank note thread 701 illustrated in Figure 10 is a "blank" thread in that the light control layer 720 is unmodified and therefore each blank thread provides the same optical effect to a viewer. The bank note thread is typically produced as a single thread and then inserted into the paper as a continuous length during the papermaking process as is well known in the art.

A "blank" bank note substrate 700 is illustrated in Figure 11. The blank bank note substrate 700 is produced by inserting the blank thread 701 into a paper bank note substrate material 711 such that the thread is viewable through windowed regions 702 as in Figure 9. Here the thread acts as a security device. By selective modification of the light control layer of a blank bank note substrate, registration of indicia on the security thread with the windowed regions on the bank note substrate can easily be achieved.

The final step in the production of a bank note is typically the application of a varnish over the entirety of the bank note. By "varnish" we mean a polymeric resin, which is typically clear. Advantageously therefore, the varnish in such a finishing step may be applied to the blank bank note substrate 700 in order to modify the light control layer 720 on the exposed areas of thread in the windowed regions 702. The varnish may be applied to the light control layer 720 in the same manner as described above in relation to Figures 1c and 3, such that the modified part(s) of the bank note thread exhibit the same optical effect as in the case where the light control layer is not present. The varnish may be applied to define indicia 705 such that, upon tilting of the bank note, the indicia appear green on a blue background. Alternatively, the varnish may be applied in "negative" such that the indicia appear blue on a green background when the bank note is tilted. The varnish is typically applied by one of flexographic, lithographic or screen printing.

The use of varnish as described above takes advantage of a typical bank note production process. However, the light control layer may be modified by the use of digital printing as described in relation to Figure 3, or by deformation or removal as described in relation to Figure 5, or a combination of any of the above.

As will be appreciated by the person skilled in the art, a security thread may be used as a security device in security documents other than bank notes, for example in passports.

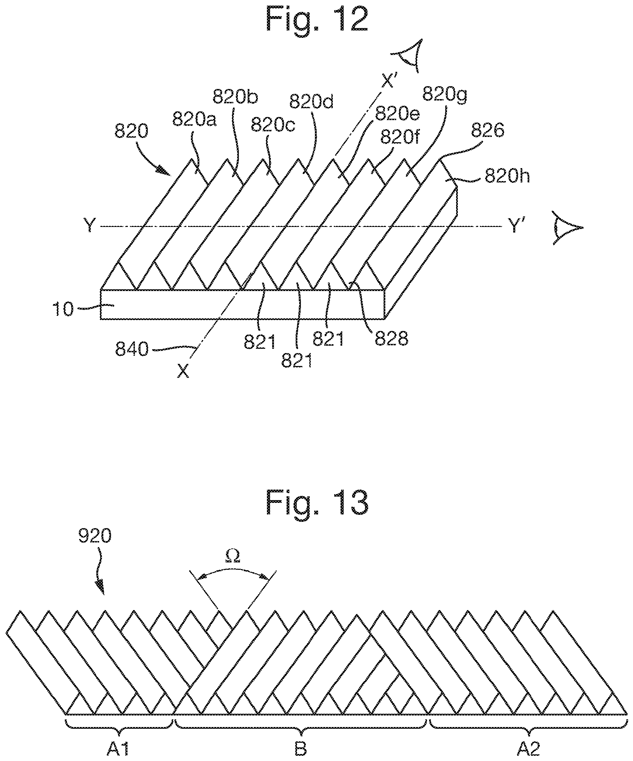

The examples above have each been described with a light control layer comprising a microprismatic structure comprising a plurality of linear microprisms. Figure 12 is a three-dimensional drawing of such a light control layer, shown generally at 820, positioned above and in contact with a colour shifting element 10 (although as described above contact is not necessary). The microprismatic structure comprises an array of linear microprisms 820a, 820b...820f each having a triangular cross section (shown generally at 821). The linear microprisms substantially abut each other along their long axes, and are parallel with each other about their long axes. The array of microprisms defines a series of elevations 826 and depressions 828. Typically the pitch of the microprism array (e.g. their width) is in the range of 1-100µm, preferably 5-70µm, with height of the microprisms being in the range of 1-100µm, preferably 5-40µm.

Opposing end faces of an individual microprism are substantially parallel, and such a microprism is known as a "one-dimensional" microprism. The microprismatic structure 820 shown in Figure 12 is therefore a one-dimensional microstructure as it comprises a plurality of one-dimensional microprisms. The term "one-dimensional" is used because the optical effect produced by the microprism is significantly stronger (i.e. more noticeable to a user) in one direction of viewing. In the example of Figure 12, the effect of the light control layer (i.e. an exhibited red to blue colour shift) is most noticeable if viewed along a direction Y-Y' perpendicular to the long axes of the microprisms in Figure 12.

The optical effect exhibited by the light control layer is therefore anisotropic. If the device is rotated within its plane, the exhibited optical effect is seen most readily when the device is tilted with the viewing direction perpendicular to the long axes of the microprisms (i.e. along Y-Y'). If the device is rotated such that the viewing direction is parallel with the long axes of the microprisms (i.e. along X-X'), the effect is seen to a lesser extent.

A variety of different light control layers can be selectively modified according to the invention in order to provide a variety of memorable optical effects to a viewer that are difficult to counterfeit, as will be highlighted with reference to the following Figures 13 to 19.

Figure 13 illustrates an example light control layer 920 that can be placed over at least a part of a colour shifting element before being selectively modified as has been described above. The light control layer 920 comprises three regions A1, B and A2, each comprising a plurality of microprisms. The microprisms in each array are parallel with each other, and the microprisms of regions A1 and A2 are parallel. However, the microprisms of region B are offset from those of regions A1 and A2, such that the long axes of the microprisms of regions A1 and A2 define an angle Ω with the long axes of region B. Thus, the light control layer 920 will provide a colour shifting effect when tilted and viewed along a direction perpendicular to the long axes of the microprisms of regions A1 and A2, as well as a readily seen colour shifting effect when the light control layer 920 is rotated and viewed from a direction perpendicular to the long axes of region B. This is in contrast to the light control layer of Figure 12, where the long axes of the microprisms are aligned in a single direction.

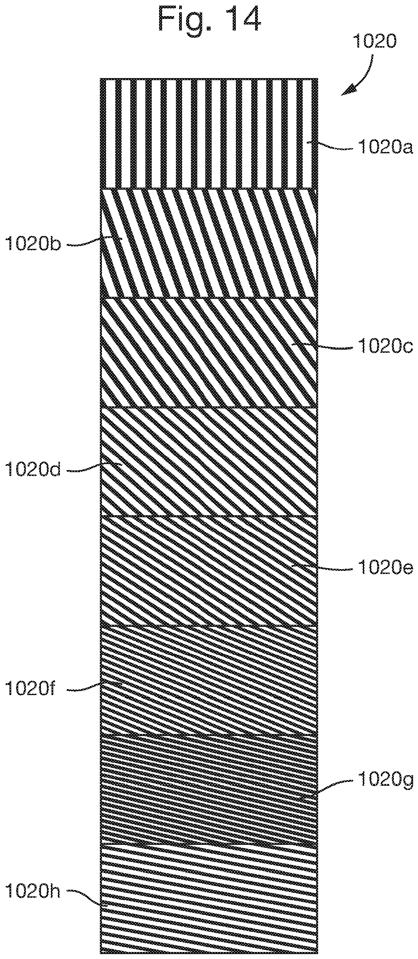

Therefore, if a security device having a light control layer comprising a microprismatic structure having offset microprisms is provided within a security document substrate, selective modification of such a light control layer can provide a number of different effects upon tilting and rotation of the security document substrate. It is envisaged that light control layers having a plurality of regions offset from each other can be used, as shown in Figure 14. Figure 14 schematically illustrates a light control layer 1020 comprising a plurality of linear microprisms arranged in a plurality of arrays 1020a, 1020b...1020h rotationally offset to each other.

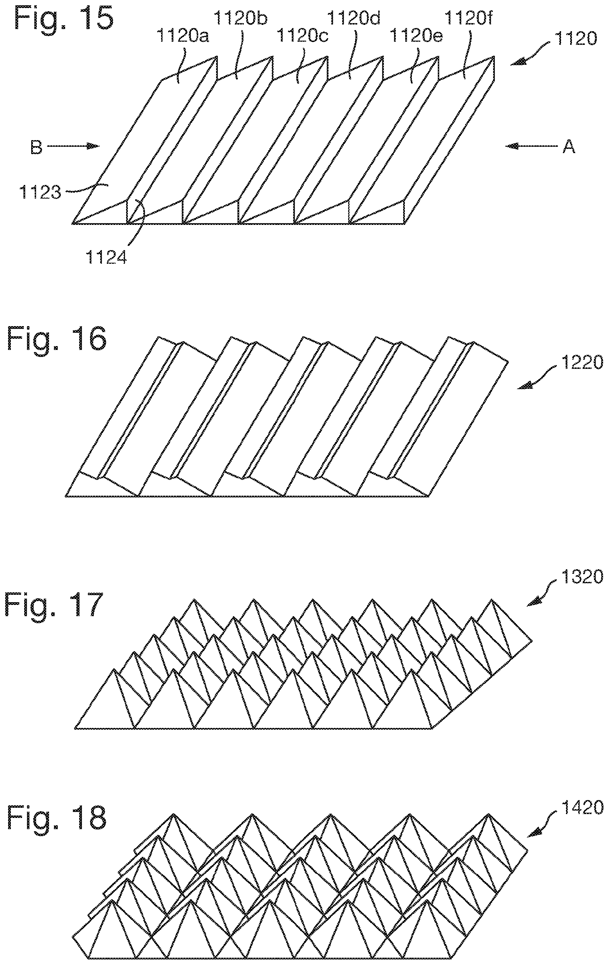

Figure 15 illustrates a light control layer 1120 comprising a plurality of microprisms 1120a, 1120b...1120f each having a "saw-tooth" structure, in that one facet (shown here at 1123) defines a more acute angle with the colour shifting element than the other facet of the microprism (shown at 1124). Such a saw-tooth structure, when viewed from direction A, will provide a colour shift effect that occurs over a narrow angle of tilt. Conversely, when viewed from direction B, the colour shift occurs over a relatively large angle of tilt.

The light control layer may comprises a series of multi-faceted microprisms (i.e. having more than two facets), as shown in the example light control layer 1220 of Figure 16.

To obtain more isotropy in the optical properties of the security device, a "two-dimensional" microprismatic structure may be used comprising microprisms that are not as rotationally dependent as the linear microprisms of Figure 12 for example. Such examples include corner cubes, square based pyramid microprisms as depicted in the light control layer 1320 of Figure 17, or more generally polygon-based pyramidal microprisms such as the hexagonal based pyramidal microprisms seen in the light control layer 1420 of Figure 18.

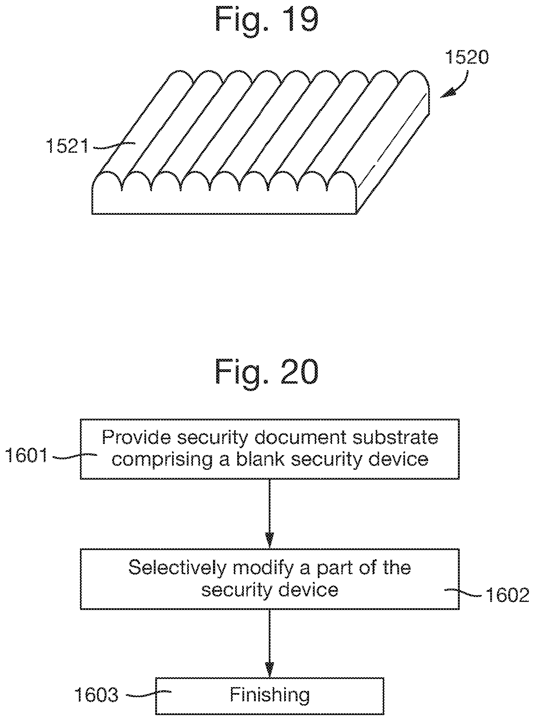

Figure 19 depicts a light control layer 1520 according to a comparative example which has a structure similar to a microprismatic structure, but instead of microprisms comprises an array of lecticules 1521 with a domed surface structure.

A security document substrate can be provided comprising a security device with a colour shifting element and a light control layer as described above in relation to Figures 12-19 (although other forms of light control layer are envisaged). A part of the light control layer can be selectively modified through, for example the addition of resin or by selectively removing or deforming a part of the light control layer using processes such as laser ablation.

In the examples described above, the security device comprises a light control layer that covers substantially the entirety of the colour shifting element. However, it is envisaged that a security device integrated within a security document substrate may be provided where the light control layer covers only a part of the colour shifting element. This may allow for more efficient generation of indicia through modification of the light control layer if, for example, the uncovered part of the colour shifting element defines a large part of a desired indicia that is common to each of the subsequently personalised security documents.

An example method of creating a security document using the present invention can be summarised in the flow chart of Figure 20. At step 1601 a security document substrate is provided comprising a blank security device. The security device comprises a colour shifting element and a light control layer and is integrated within the security document substrate. As described above, a "blank" security device is one where the light control layer is unmodified such that each "blank" security device exhibits the same optical effect to a viewer. The light control layer may cover substantially the whole of the colour shifting element or may cover just a part of the colour shifting element. It is envisaged that a plurality of such security document substrates each comprising a blank security device may be provided to a security document manufacturer.

The colour shifting element and/or the complete security device can either be formed directly within the security document substrate (e.g. as part of a laminate layer of an identification substrate) or may be supplied as part of a security article, such as a security thread, strip or patch, which can then be applied to or incorporated into such a document.

At step 1602 a part of the blank security device is selectively modified. More specifically, a part of the light control layer of the security device is selectively modified. As described above, the selective modification may be performed by one or more of: introducing a material to the light control layer, removing a part of the light control layer, and deforming a part of the light control layer. The selective modification is typically performed in order to define indicia upon the security device that is visible upon tilting of the security device due to the differing optical effects provided by the modified and unmodified parts of the security device. It is envisaged that the security document manufacturer, upon receiving the plurality of security document substrates each comprising a blank security device, may selectively modify the security devices in order to provide a plurality of unique, personalised security documents. For example, the blank security devices may be selectively modified in order to define unique biometric data relating to the holder of each passport.

At step 1603 the process finished with the final "finishing" processes being applied to the security documents, including cutting, stacking and batching processes.

As described above, personalised security documents may be produced by selectively modifying a "blank" light control layer of a "blank" security device within a security document substrate. Examples of such substrates that may be selectively modified will now be described with reference to Figures 21 to 24.

Figure 21 depicts an exemplary security document substrate 2100, here in the form of a banknote substrate. Figure 21a shows the banknote substrate in plan view whilst Figure 21b shows the same banknote substrate in cross-section along the line Q-Q'. In this case, the banknote is a polymer (or hybrid polymer/paper) banknote, having a transparent substrate 2102. Two opacifying layers 2103a and 2103b are applied to either side of the transparent substrate 2102, which may take the form of opacifying coatings such as white ink, or could be paper layers laminated to the substrate 2102.

The opacifying layers 2103a and 2103b are omitted across an area 2101 which forms a window within which the blank security device 100 is located. As shown best in the cross-section of Figure 21b, a colour shifting element 10 is provided on one side of the transparent substrate 2102, and a light control layer 20 is provided on the opposite surface of the substrate such that light from the colour shifting element interacts with the light control layer (however the colour shifting element and the light control layer may alternatively be provided on the same side of the substrate). The colour shifting element 10 and light control layer 20 are each as described above with respect to any of the disclosed embodiments, such that the blank device 100 displays an optically variable effect in window 2101 upon tilting the device. The blank security device 100 may be viewed in transmission or reflection. In the case where it is to be viewed in reflection it is desirable to use a substantially opaque colour shifting element such as a printed ink comprising an optically variable pigment, although a partially transparent colour shifting element may be used in conjunction with an absorbing element as described above.

Figure 22 shows a security document substrate in the form of a conventional paper-based banknote provided with a security article 2105 in the form of a security thread, which is inserted during paper-making such that it is partially embedded into the paper so that portions of the paper 2104 lie on either side of the thread. This can be done using the techniques described in EP0059056 where paper is not formed in the window regions during the paper making process thus exposing the security thread in is incorporated between layers of the paper. The security thread 2105 is exposed in window regions 2101 of the banknote. Alternatively the window regions 2101 may for example be formed by abrading the surface of the paper in these regions after insertion of the thread. The blank security device 100 is formed on the thread 2105, which comprises a transparent substrate with light control layer 20 provided on one side and a colour shifting element 10 provided on the other. In Figure 22(b), the colour shifting element and light control layer are both provided continuously along opposing sides of the thread 2105 such that registration of the light control layer and exposed window regions is not required.

In Figure 23, the security document substrate 2100 is again a conventional paper-based banknote, provided with a strip element or insert 2108. The strip 2108 is based on a transparent substrate and is inserted between two plies of paper 2109a and 2109b. The blank security device 100 is formed by a light control layer 20 on one side of the strip substrate, and a colour shifting element 10 on the other. The paper plies 2109a and 2109b are apertured across region 2101 to reveal the blank security device 100, which in this case may be present across the whole of the strip 2108 or could be localised within the aperture region 2101. The colour shifting element 10 is visible through the light control layer 20 due to the transparent nature of the strip 2108.

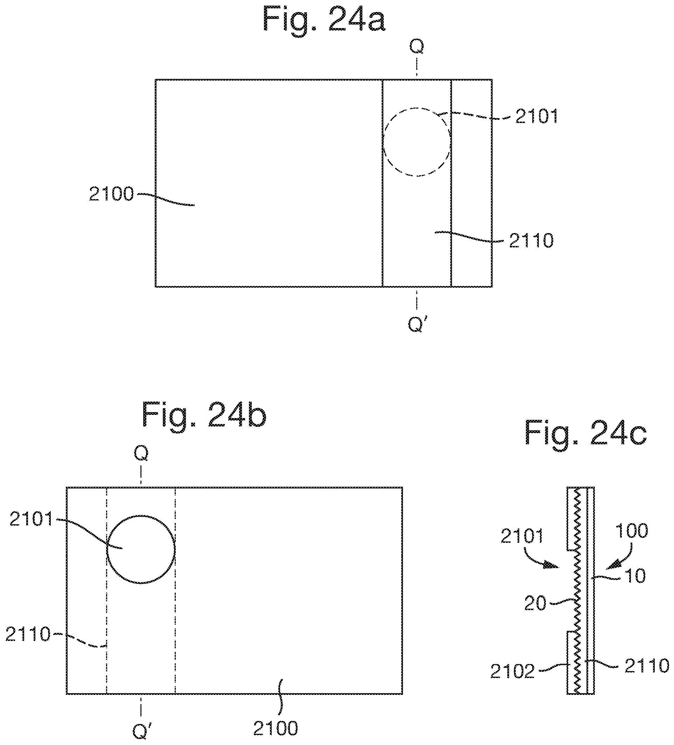

A further example is shown in Figure 24 where Figures 24(a) and (b) show the front and rear sides of the security document substrate 2100 respectively, and Figure 24(c) is a cross section along line Q-Q'. Security article 2110 is a strip or band comprising a blank security device 100 according to any of the embodiments described above. The security article 2110 is formed into a security document substrate 2100 comprising a fibrous substrate 2102, using a method described in EP-A-1141480. The strip is incorporated into the security document such that it is fully exposed on one side of the document (Figure 24(a)) and exposed in one or more windows 2101 on the opposite side of the document (Figure 24(b)). Again, the blank security device is formed on the strip 2110, which comprises a transparent substrate with a light control layer 20 formed on one surface and colour shifting element 10 formed on the other.

In the examples of Figures 21 to 24, the colour shifting element and light control layer are described as being on opposing side of a transparent substrate. However in other examples they may be provided on the same side of the transparent substrate. Advantageously, the light control layer and colour shifting element are provided continuously in the examples of Figures 21 to 24 such that registration with the windowed regions is not required.

## Claims

1. A method of forming a security document, comprising:
(i) providing (1601) a security document substrate (200), the security document substrate comprising a security device comprising a colour shifting element (10) and a light control layer covering at least a part of the colour shifting element, wherein the light control layer has a surface structure (220) comprising one or more elevations and depressions that modifies the angle of light from the colour shifting element to generate a first optical effect, wherein the surface structure comprises a microprismatic structure, wherein the microprismatic structure comprises a plurality of microprisms and;
(ii) selectively modifying (1602) a part of the light control layer so as to generate a second optical effect different from the first optical effect.

2. The method of claim 1 wherein, at least at one viewing angle, the first optical effect exhibits a first colour, and the second optical effect exhibits a second colour different from the first colour.

3. The method of claim 1 or claim 2, wherein the second optical effect is the optical effect generated by the colour shifting element in the absence of a light control layer.

4. The method of any of the preceding claims, wherein the selectively modifying comprises introducing a material to a part of the light control layer, preferably wherein the material is introduced into at least one depression in the surface structure of the light control layer.

5. The method of claim 4, wherein the material has a refractive index substantially the same as that of the light control layer.

6. The method of any of claims 4 to 5, wherein the material is a printable resin.

7. The method of claim 6, wherein the printable resin is selectively introduced to a part of the light control layer by digital printing, preferably inkjet printing or laser printing.

8. The method of any of claims 4 to 7, wherein the material is a varnish, preferably wherein the varnish is applied by one of flexographic, lithographic or screen printing.

9. The method of any of the preceding claims, wherein the selectively modifying comprises removing at least a part of the light control layer such that no light control layer is present at that part of the security device.

10. The method of any of the preceding claims, wherein the selectively modifying comprises deforming at least a part of the light control layer.

11. The method of any of the proceeding claims, wherein the first and second optical effects are variable optical effects.

12. The method of any of the preceding claims, wherein the microprismatic structure comprises an array of linear microprisms.

13. The method of any of the preceding claims, wherein the light control layer is selectively modified so as to define a pattern related to the security document, preferably wherein the pattern is unique to the security document.

14. The method of claim 13, wherein the light control layer is selectively modified so as to define biometric data related to the owner of the security document.

15. The method of any of the preceding claims, wherein the security document is a passport, banknote, security label, identification card, driving licence or other document of value.

## Patentansprüche

1. Verfahren zum Bilden eines Sicherheitsdokuments, das Folgendes umfasst:
(i) Bereitstellen (1601) eines Sicherheitsdokumentsubstrats (200), wobei das Sicherheitsdokumentsubstrat eine Sicherheitsvorrichtung umfasst, die ein Farbverschiebungselement (10) und eine mindestens einen Teil des Farbverschiebungselements abdeckende Lichtregulierungsschicht umfasst, wobei die Lichtregulierungsschicht eine eine oder mehrere Erhebungen und Vertiefungen umfassende Oberflächenstruktur (220) aufweist, die den Winkel von Licht von dem Farbverschiebungselement verändert, um einen ersten optischen Effekt zu erzeugen, wobei die Oberflächenstruktur eine mikroprismatische Struktur umfasst, wobei die mikroprismatische Struktur eine Vielzahl von Mikroprismen umfasst, und
(ii) selektives Verändern (1602) eines Teils der Lichtregulierungsschicht, um einen von dem ersten optischen Effekt verschiedenen zweiten optischen Effekt zu erzeugen.

2. Verfahren nach Anspruch 1, wobei unter mindestens einem Betrachtungswinkel der erste optische Effekt eine erste Farbe zeigt und der zweite optische Effekt eine von der ersten Farbe verschiedene zweite Farbe zeigt.

3. Verfahren nach Anspruch 1 oder Anspruch 2, wobei es sich bei dem zweiten optischen Effekt um den optischen Effekt handelt, der von dem Farbverschiebungselement in Abwesenheit einer Lichtregulierungsschicht erzeugt wird.

4. Verfahren nach einem der vorangehenden Ansprüche, wobei das selektive Verändern das Einbringen eines Materials in einen Teil der Lichtregulierungsschicht umfasst, wobei vorzugsweise das Material in mindestens eine Vertiefung in der Oberflächenstruktur der Lichtregulierungsschicht eingebracht wird.

5. Verfahren nach Anspruch 4, wobei das Material einen Brechungsindex aufweist, der im Wesentlichen gleich demjenigen der Lichtregulierungsschicht ist.

6. Verfahren nach einem der Ansprüche 4 bis 5, wobei es sich bei dem Material um ein druckfähiges Harz handelt.

7. Verfahren nach Anspruch 6, wobei das druckfähige Harz durch Digitaldrucken, vorzugsweise Tintenstrahldrucken oder Laserstrahldrucken, selektiv in einen Teil der Lichtregulierungsschicht eingebracht wird.

8. Verfahren nach einem der Ansprüche 4 bis 7, wobei es sich bei dem Material um einen Lack handelt, wobei vorzugsweise der Lack durch einen von Flexo-, lithographischem oder Siebdruck aufgetragen wird.

9. Verfahren nach einem der vorangehenden Ansprüche, wobei das selektive Verändern das Entfernen mindestens eines Teils der Lichtregulierungsschicht umfasst, sodass an diesem Teil der Sicherheitsvorrichtung keine Lichtregulierungsschicht vorhanden ist.

10. Verfahren nach einem der vorangehenden Ansprüche, wobei das selektive Verändern das Verformen mindestens eines Teils der Lichtregulierungsschicht umfasst.

11. Verfahren nach einem der vorangehenden Ansprüche, wobei es sich bei dem ersten und dem zweiten optischen Effekt um veränderliche optische Effekte handelt.

12. Verfahren nach einem der vorangehenden Ansprüche, wobei die mikroprismatische Struktur eine Anordnung von linearen Mikroprismen umfasst.

13. Verfahren nach einem der vorangehenden Ansprüche, wobei die Lichtregulierungsschicht selektiv verändert wird, um ein mit dem Sicherheitsdokument zusammenhängendes Muster zu definieren, wobei vorzugsweise das Muster für das Sicherheitsdokument einzigartig ist.

14. Verfahren nach Anspruch 13, wobei die Lichtregulierungsschicht selektiv verändert wird, um mit dem Eigentümer des Sicherheitsdokuments zusammenhängende biometrische Daten zu definieren.

15. Verfahren nach einem der vorangehenden Ansprüche, wobei es sich bei dem Sicherheitsdokument um einen Reisepass, eine Banknote, ein Sicherheitsetikett, eine Ausweiskarte, einen Führerschein oder ein anderes Wertdokument handelt.

## Revendications

1. Procédé servant à former un document de sécurité, comportant les étapes consistant à :
(i) mettre en œuvre (1601) un substrat de document de sécurité (200), le substrat de document de sécurité comportant un dispositif de sécurité comportant un élément à variation de couleur (10) et une couche de contrôle de lumière recouvrant au moins une partie de l'élément à variation de couleur, dans lequel la couche de contrôle de lumière a une structure de surface (220) comportant un ou plusieurs reliefs et évidements permettant de modifier l'angle de lumière en provenance de l'élément à variation de couleur pour générer un premier effet optique, dans lequel la structure de surface comporte une structure microprismatique, dans lequel la structure microprismatique comporte une pluralité de microprismes et ;
(ii) modifier de manière sélective (1602) une partie de la couche de contrôle de lumière de manière à générer un deuxième effet optique différent du premier effet optique.

2. Procédé selon la revendication 1, dans lequel, au moins selon un angle de vision, le premier effet optique présente une première couleur, et le deuxième effet optique présente une deuxième couleur différente de la première couleur.

3. Procédé selon la revendication 1 ou la revendication 2, dans lequel le deuxième effet optique est l'effet optique généré par l'élément à variation de couleur en l'absence d'une couche de contrôle de lumière.

4. Procédé selon l'une quelconque des revendications précédentes, dans lequel l'étape consistant à modifier de manière sélective comporte l'étape consistant à introduire un matériau sur une partie de la couche de contrôle de lumière, de préférence dans lequel le matériau est introduit dans au moins un évidement dans la structure de surface de la couche de contrôle de lumière.

5. Procédé selon la revendication 4, dans lequel le matériau a un indice de réfraction sensiblement le même que celui de la couche de contrôle de lumière.

6. Procédé selon l'une quelconque des revendications 4 à 5, dans lequel le matériau est une résine imprimable.

7. Procédé selon la revendication 6, dans lequel la résine imprimable est introduite de manière sélective sur une partie de la couche de contrôle de lumière par impression numérique, de préférence par impression à jet d'encre ou par impression au laser.

8. Procédé selon l'une quelconque des revendications 4 à 7, dans lequel le matériau est un vernis, de préférence dans lequel le vernis est appliqué par l'une parmi une impression flexographique, lithographique ou sérigraphique.

9. Procédé selon l'une quelconque des revendications précédentes, dans lequel l'étape consistant à modifier de manière sélective comporte l'étape consistant à retirer au moins une partie de la couche de contrôle de lumière de telle sorte qu'aucune couche de contrôle de lumière n'est présente au niveau de cette partie du dispositif de sécurité.

10. Procédé selon l'une quelconque des revendications précédentes, dans lequel l'étape consistant à modifier de manière sélective comporte l'étape consistant à déformer au moins une partie de la couche de contrôle de lumière.

11. Procédé selon l'une quelconque des revendications précédentes, dans lequel les premier et deuxième effets optiques sont des effets optiques variables.

12. Procédé selon l'une quelconque des revendications précédentes, dans lequel la structure microprismatique comporte un réseau de microprismes linéaires.

13. Procédé selon l'une quelconque des revendications précédentes, dans lequel la couche de contrôle de lumière est modifiée de manière sélective de manière à définir un motif associé au document de sécurité, de préférence dans lequel le motif est propre au document de sécurité.

14. Procédé selon la revendication 13, dans lequel la couche de contrôle de lumière est modifiée de manière sélective afin de définir des données biométriques associées au propriétaire du document de sécurité.

15. Procédé selon l'une quelconque des revendications précédentes, dans lequel le document de sécurité est un passeport, un billet de banque, une étiquette de sécurité, une carte d'identification, un permis de conduire ou tout autre document de valeur.
